# EUROPEAN PATENT APPLICATION

(11) **EP 2 921 084 A1**
(43) Date of publication of application: **23.09.2015**
(21) Application number: 14863040.3
(22) Date of filing: 17.06.2014
(51) Int. Cl.: A47C 21/04, F24D 13/00, A47C 27/00

(54) **PREFABRICATED ELECTRIC HEATING MAT**

(30) Priority: 11.12.2013 KR 20130154172; 16.04.2014 KR 20140045321
(71) Applicant: Marudeoham, Inc., Suwon-si, Gyeonggi-do 442-130 (KR)
(72) Inventor: JEONG, Ki Woon, Yongin-si Gyeonggi-do 446-906 (KR); KIM, Dong Hwan, Ansan-si Gyeonggi-do 426-210 (KR)
(74) Representative: Groth & Co. KB
(86) International application number: PCT/KR2014/005294
(87) International publication number: WO 2015/088115

(57) **Abstract**

Provided is a self-assembly electric mat. The self-assembly electric mat includes an electric heating mat including at least one self-assembly heating panel which comprises an electric hot wire for heating, which is built therein, and a plurality of connectors electrically connected to the electric hot wire on sides thereof and a controller which is connected to any one of the plurality of connectors to supply direct current (DC) power to the electric heating mat, controls a temperature of the self-assembly heating panel forming the electric heating mat by controlling a voltage applied to the electric heating mat, and blocks the DC power supplied to the electric heating mat by sensing an overcurrent flowing through the electric heating mat.

## Description

### [Technical Field]

The present invention relates to a self-assembly electric mat, and more particularly, to a self-assembly electric mat which prevents electromagnetic waves harmful to a human body, is easy to carry, and provides electric stability in handling.

### [Background Art]

Electric mats, which convert electric energy supplied from a general home alternating current (AC) power into thermal energy and are used as heating apparatuses, generally have a long coil, that is, a hot wire forming a heating wire to achieve an object of heating.

Here, in general electric mats using home AC power, due to properties of AC power in which a voltage and current are periodically changed, it is difficult to constantly a voltage supplied to a heating wire of an electric mat. Accordingly, electromagnetic waves harmful to a human body are generated by the heating wire. Also, due to a high supply voltage, a risk of being electrocute d exists.

To overcome a limitation described above, recently, interest in hot water mats which include a hose instead of an electric hot wire to circulate hot water. However, since a hose for supplying hot water is built and an additional boiler is necessary in general hot water mats, not only volumes and manufacturing costs thereof generally increase but also there are difficulties in maintenance. Also, since a boiler for supplying hot water is installed adjacently to a hot water mat and high power is necessary, compared with general electric mats, a lot of harmful electromagnetic waves are generated and a risk of being electrocuted still exists.

Particularly, lately, as outdoor activities of families increase, the need of portable electric mats increases. However, since general electric mats using an electric hot wire have a single panel shape, when general electric mats are wound as a roll or folded while being stored or carried, it is difficult to carry them due to a large volume thereof and a heating wire built therein is easily damaged. Also, it is impossible to carry general hot water mats using hot water due to a large volume thereof caused by a hose built therein. Also, since general electric mats and hot water mats generally have a single panel shape formed to fit a height of an adult male, when a children or a female who is short uses one of them, electric energy is unnecessarily wasted.

Meanwhile, when a general electric mat using an electric heating wire is formed by assembling several divided unit electric mats, due to properties of home AC power in which a voltage and current are periodically changed and a supply voltage is high, a risk of being electrocuted is high in handling unit electric mats to assemble or separate them. When additional controllers are provided to respective unit electric mats to prevent the risk of being electrocuted, not only manufacturing costs increase but also it is difficult to carry or handle them.

Accordingly, it is necessary to provide a practical and highly available technology with respect to an electric mat which is easily carried and provides stability in handling it.

As a cited reference, there is Korean Patent Registration No. 20-0195979 (registered on September 15, 2009).

### [Disclosure]

### [Technical Problem]

An aspect of the present invention is to provide a self-assembly electric mat which prevents the occurrence of electromagnetic waves harmful to a human body, is easily carried, and provides stability in handling.

### [Technical Solution]

One aspect of the present invention provides a self-assembly electric mat including an electric heating mat comprising at least one self-assembly heating panel which comprises an electric hot wire for heating, which is built therein, and a plurality of connectors electrically connected to the electric hot wire on sides thereof and a controller which is connected to any one of the plurality of connectors to supply direct current (DC) power to the electric heating mat, controls a temperature of the self-assembly heating panel forming the electric heating mat by controlling a voltage applied to the electric heating mat, and blocks the DC power supplied to the electric heating mat by sensing an overcurrent flowing through the electric heating mat.

The electric heating mat may include a bridge which electrically connects the respective connectors of the mutually adjacent self-assembly heating panels when two or more self-assembly heating panels are coupled.

The self-assembly heating panel may include a coupling member which fixes a contact portion between two adjacent self-assembly heating panels when two or more self-assembly heating panels are coupled.

The coupling member may be one of a magnet, a zipper, a Velcro tape, and a double-sided tape.

The self-assembly heating panel may include a single bar resistor whose resistance is recognized by the controller, the bar resistor being provided inside one of the plurality of connectors.

The plurality of connectors each may include three electrode terminals which are connected to the electric hot wire built in the self-assembly heating panel, in which the electrode terminal in the middle has a different polarity from the electrode terminals on both ends to allow a change of direction, and two resistive terminals each disposed between the electrode terminals whose polarities differ from the polarity thereof and connected with the single bar resistor in parallel.

The plurality of connectors each may be inserted into the side of the self-assembly heating panel with a certain interval and formed of a female socket having a T-shape.

The self-assembly electric mat may include a bridge having a structure of electrically connecting the respective connectors of the mutually adjacent self-assembly heating panels when two or more self-assembly heating panels are coupled, in which both ends of the bridge are inserted into the respective connectors of the mutually adjacent self-assembly heating panels and built inside the self-assembly heating panels.

The self-assembly electric mat may include a safety cap inserted into an inlet of each of the plurality of connectors to prevent foreign substances from getting into each of the plurality of connectors formed as the female socket inserted into the side of the self-assembly heating panel.

The self-assembly heating panel may include four sides in which the connectors are formed as female sockets and inserted and fixed with a certain interval and may be formed as a hexahedron with a square shape when viewed from above.

The self-assembly heating panel may include a bottom panel which includes four connecting grooves formed on an edge of an outer end of a top surface thereof corresponding to the connectors, an electric wiring layer on which the four connectors corresponding to the four connecting grooves and the electric hot wire are disposed, a heating element which is electrically connected to the electric hot wire disposed on the electric wiring layer and heats, and a top panel formed above the heating element and the electric wiring layer to protect the heating element and the electric wiring layer.

The self-assembly heating panel may further include heat-retaining layers formed above and below the heating element to preserve heat generated from the heating element.

The heating element may be one of carbon fiber and a heating film.

The four sides of the self-assembly heating panel may be finished with silicone to be waterproofed.

The top panel and the lower panel forming the self-assembly heating panel may be formed of one of linoleum, thermoplastic poly urethane (TPU), ethylene-vinyl acetate copolymer (EVA), and silicone to be easily cleaned.

The self-assembly electric mat may further include an adaptor which converts home alternating current (AC) power into DC power and provides the controller with the DC power to supply the DC power to the electric heating mat.

The controller may include a power input unit which receives the DC power provided from the adaptor, a power on/off control unit which performs on/off switching with respect to the DC power depending on an operation of a power switch, a voltage control unit which uniformly controls a temperature of the self-assembly heating panels forming the electric heating panel regardless of the number thereof by controlling a voltage supplied to the electric heating mat, a current detection unit which detects a current value flowing through the electric heating mat, a panel number sensing unit which senses the number of the self-assembly heating panels forming the electric heating mat, and a control unit which compares the current value detected by the current detection unit with a reference current value corresponding to the number of the self-assembly heating panels sensed by the panel number sensing unit, and when it is determined as an overcurrent which exceeds an allowable current in a circuit, blocks power supplied to the electric heating mat by controlling the power on/off control unit.

The power input unit may include an overcurrent blocking portion which blocks the DC power provided from the adaptor when the overcurrent which exceeds the allowable current is input from the adaptor, an overvoltage blocking portion which blocks the DC power provided from the adaptor when an overvoltage which exceeds an allowable voltage is input from the adaptor, and an inverse connection preventing portion which blocks currents to protect the circuit when external power in which the polarity of the DC power is changed is applied.

The panel number sensing unit may include a resistor connected with the bar resistor singly built in the at least one self-assembly heating panel forming the electric heating mat and senses the number of the self-assembly heating panels by applying a change in a voltage value depending on a change in the number of the bar resistors.

The current detection unit may transmit an overcurrent signal to the control unit to block the power supplied to the electric heating mat when the current value flowing through the electric heating mat exceeds a maximum allowable current value.

The controller may include a DC/DC converter which converts the DC power provided from the adaptor into a DC voltage for a control signal to generate a control signal of the control unit.

The controller may include a timer which controls a heating time depending on an operation of a time adjusting switch.

### [Advantageous Effects]

As described above, according to one embodiment of the present invention, since an electric heating mat is formed by assembling one or more self-assembly heating panels, a size of the electric heating mat may be variously adjusted, thereby reducing electric energy.

Also, since the self-assembly heating panels are easily separable, an operation of assembling or separating the self-assembly heating panels is simple and the self-assembly heating panels are easy to carry and store.

Also, since a bridge having a structure built inside the electric heating mat to electrically connect connectors formed on sides of the self-assembly heating panels which are adjacent and coupled is provided, it is possible to reduce a risk of being electrocuted and simultaneously with making an external image aesthetic.

Also, since a voltage supplied to an electric hot wire built in the self-assembly heating panel is provided as DC power, the occurrence of harmful electromagnetic waves may be fundamentally prevented and a risk of being electrocuted may be reduced.

Also, when a current which exceeds a maximum current is applied to the self-assembly heating panel or the self-assembly heating panel is separated or coupled while the electric heating mat is operating, a current detection unit which detects a current applied to the electric heating mat formed of the self-assembly heating panels may transmit an overcurrent signal to the control unit to block power, thereby increasing electric stability.

Also, when the bridge or the self-assembly heating panel breaks down, the bridge is easily detachable in such a way that only a broken component may be individually repaired or replaced, thereby being easily maintained and reusing an existing product.

Also, since the self-assembly heating panels forming the electric heating mat may be controlled at the same time by a single controller, it is possible to reduce manufacturing costs and to make handling easy.

Also, a bar resistor whose resistance is recognized by the controller is provided inside the connectors electrically connected to an electric hot wire built in the self-assembly heating panel and formed on the sides of the self-assembly heating panel, thereby allowing the controller to easily check the number of the self-assembly heating panels forming the electric heating mat.

Additionally, a voltage control unit which adjusts a temperature of the self-assembly heating panels forming the electric heating mat by controlling a voltage applied to the electric heating mat is included in the controller in such a way that the temperature of the self-assembly heating panels forming the electric heating mat is uniformly controlled regardless of the number thereof.

Also, to form electrode terminals of the bridge which electrically connects the connectors formed on the sides of the self-assembly heating panel, the electrode terminal in the middle has a different polarity from the electrode terminals on both ends to allow a change of direction in such a way that a change in polarity of the electrode terminal is prevented although a direction of the bridge changes, thereby preventing a breakdown.

### [Description of Drawings]

FIG. 1 is an exploded perspective view illustrating an example of an electric heating mat and a controller of a self-assembly electric mat according to one embodiment of the present invention;
FIG. 2 is a perspective view of a self-assembly heating panel forming the electric heating mat shown in FIG. 1;
FIG. 3 is a side view of the self-assembly heating panel shown in FIG. 2;
FIG. 4 illustrates a top view and a perspective view of the controller shown in FIG. 1;
FIG. 5 is a perspective view of a bridge inserted into a connector of the self-assembly heating panel shown in FIG. 2;
FIG. 6 is a perspective view of the connector formed on a side of the self-assembly heating panel shown in FIG. 2;
FIG. 7 is a perspective view of a safety cap which protects an inlet of the connector shown in FIG. 6;
FIG. 8 is a top perspective view illustrating a structure in which the controller and the bridge are coupled with the connector of the self-assembly heating panel shown in FIG. 2;
FIG. 9 is a cross-sectional view of an internal configuration of the self-assembly heating panel shown in FIG. 2;
FIG. 10 is a view illustrating an electric wiring built in the self-assembly heating panel shown in FIG. 2; and
FIG. 11 is a block diagram schematically illustrating a configuration of the controller shown in FIG. 1.

### [Modes of the Invention]

Embodiments of the present invention will be structurally or functionally described. The scope of the present invention will not be limited to the embodiments described herein. That is, since the embodiments may be variously modified and may have various forms, the scope of the present invention will be understood as including equivalents thereof which can realize technical concept thereof.

Meanwhile, the meaning of terms described herein will be understood as follows.

It will be understood that although the terms "first", "second", etc. may be used herein to describe various components, these components should not be limited by these terms. These terms are only used to distinguish one component from another. For example, a first component may be designated as a second component, and similarly, the second component may be designated as the first component.

It will be understood that when a component is referred to as being "connected to" another component, it can be directly or indirectly connected to the other component. That is, for example, intervening components may be present. On the contrary, when a component is referred to as being "directly connected to" another component, it will be understood that there is no intervening components. Also, other expressions which describe relationships between components, that is, "between" and "directly between" or "adjacent to" and "directly adjacent to" will be also understood similarly thereto.

Singular expressions, unless defined otherwise in contexts, include plural expressions. Terms of "comprise" or "have" are used to designate features, numbers, steps, operations, elements, components or combinations thereof disclosed in the specification as being present but not to exclude possibility of the existence or the addition of one or more other features, numbers, steps, operations, elements, components, or combinations thereof.

In respective steps, reference symbols, for example, a, b, c, etc. are used for convenience of description. These reference symbols do not indicate an order of the respective steps. The respective steps may be performed differently from a specified order unless a particular order is not defined clearly in contexts. That is, the respective steps may be performed identically to the specified order, may be performed actually at the same time, and may be performed in the reverse order.

All terms used herein, unless defined otherwise, have the same meaning generally understood by one of ordinary skill in the art. Terms generally used and defined in dictionaries will be understood as being identical to the contextual meaning of related art. Unless defined clearly in the specification, it will not be understood as having an ideal or excessively formal meaning.

Hereinafter, exemplary embodiments of the present invention will be described in detail with reference to the attached drawings.

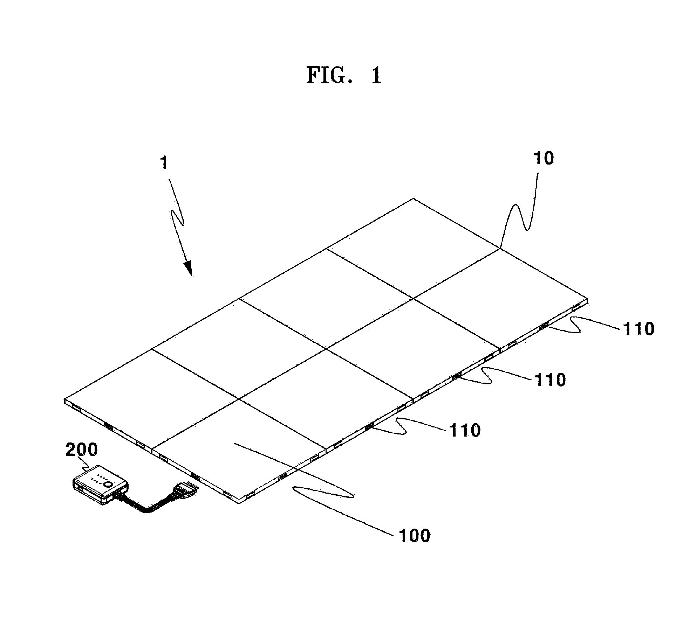

FIG. 1 is an exploded perspective view illustrating an example of an electric heating mat 10 and a controller 200 of a self-assembly electric mat 1 according to one embodiment of the present invention.

As shown in FIG. 1, the self-assembly electric mat 1 includes the electric heating mat 10 and the controller 200. In detail, the electric heating mat 10 includes at least one self-assembly heating panel 100 which includes an electric hot wire for heating is built therein and a plurality of connectors 110 electrically connected to the electric hot wire on sides thereof. The number of self-assembly heating panels is adjusted depending on an installation place.

Also, the controller 200 is connected to any one of the plurality of connectors 110 to supply direct current (DC) power to the electric heating mat 10, adjusts a temperature of the self-assembly heating panel 100 forming the electric heating mat 10 by controlling a voltage applied to the electric heating mat 10, and cuts off the DC power supplied to the electric heating mat 10 by sensing an overcurrent flowing through the electric heating mat 10. As described above, since the self-assembly electric mat 1 includes the electric heating mat 10 formed by assembling at least one self-assembly heating panel, the self-assembly electric mat 1 may be variously adjusted in size, simply handled, and easily carried and stored.

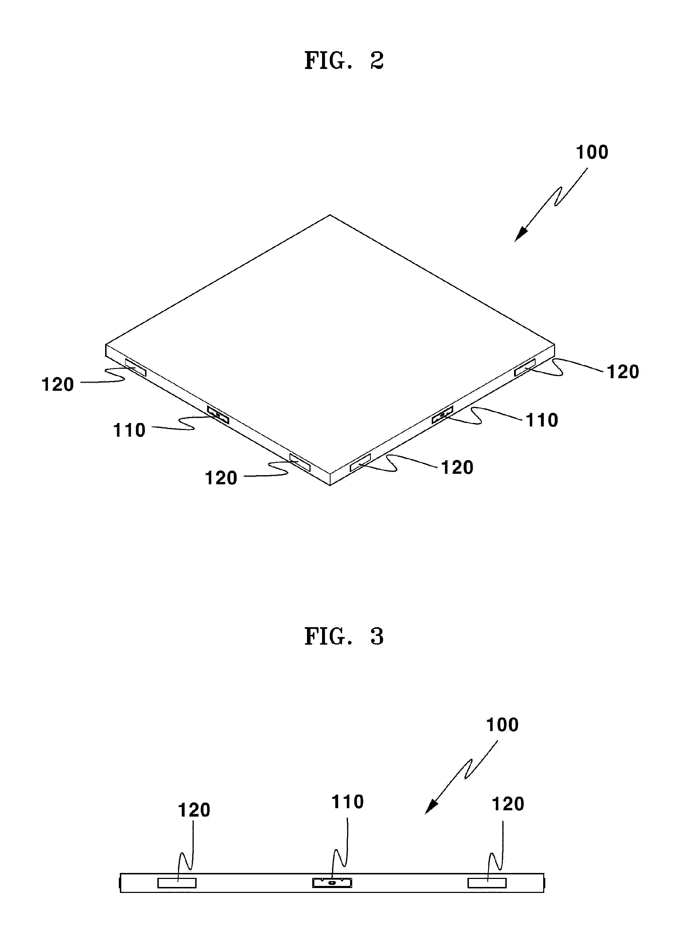

FIGS. 2 and 3 are a perspective view and a side view of the self-assembly heating panel 100 forming the electric heating mat 10 shown in FIG. 1. As shown in the drawings, the self-assembly heating panel 100 forming the electric heating mat 10 according to one embodiment includes the connector 110 electrically connected to the electric hot wire built therein and a coupling member 120 on the sides thereof.

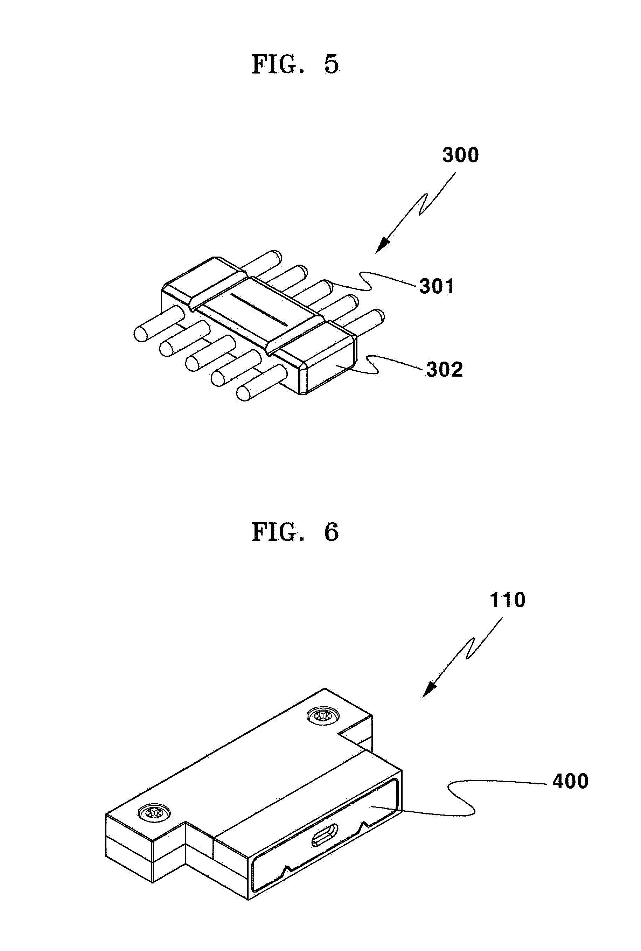

Here, the connector 110 is formed as a female socket into which a terminal formed on one side of a bridge 300 of FIG. 5 which will be described below is inserted when two or more of the self-assembly heating panels 100 are adjacent to and coupled with one another. Two or more of the self-assembly heating panels 100 are adjacent to and coupled with one another, the coupling members 120 are mutually adjacent and physically fasten a contact portion.

Here, the coupling member 129 is formed of one of a magnet, a zipper, a Velcro tape, and a double-sided adhesive tape and may be formed of a Velcro tape according to one embodiment of the present invention.

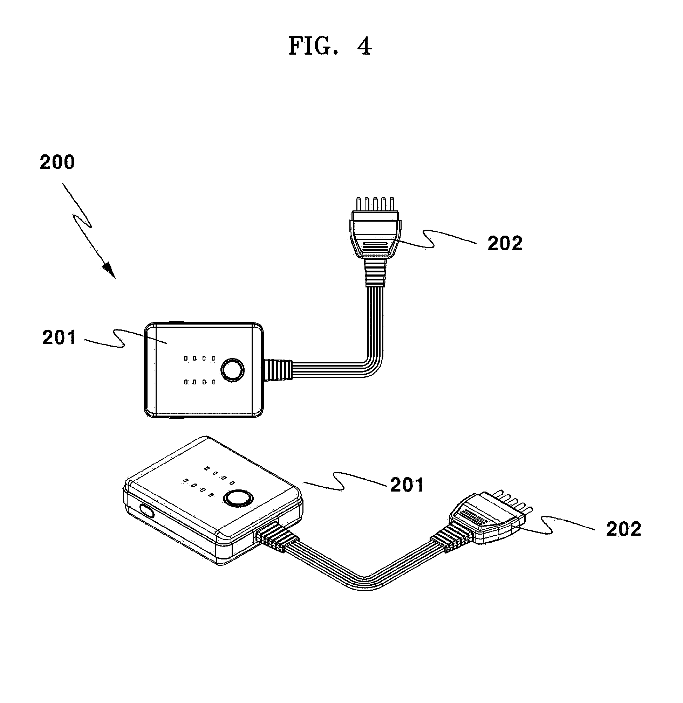

FIG. 4 illustrates a top view and a perspective view of the controller 200 shown in FIG. 1. As shown in the drawing, the controller 200 forming the self-assembly electric mat 1 according to one embodiment of the present invention includes a body 201 connected to an adaptor 20 which converts home alternating current (AC) power into DC power to supply the DC power to the self-assembly heating panel 100 forming the electric heating mat 10 and a connecting unit 202 inserted into and coupled with the connector 110 formed on the side of the self-assembly heating panel 100.

Here, the connector 202 may include five terminals formed on an end to be inserted into the connector 110, and the body 201 may include a temperature adjusting switch which controls a temperature of the electric heating mat 10, a time adjusting switch which controls a time, a power on/off switch which turns on and off power, and a display which indicates a heating time and a heating temperature on an outside thereof.

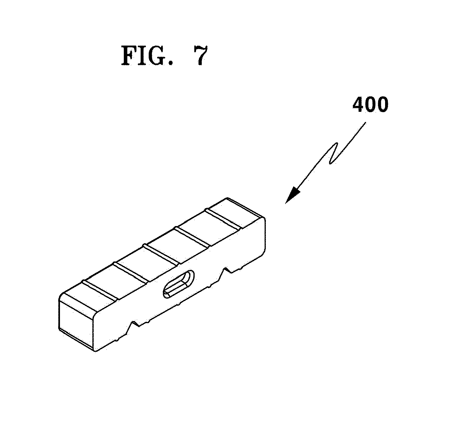

The self-assembly electric mat 1 according to one embodiment of the present invention may control the plurality of self-assembly heating panels 100 forming the electric heating mat 10 at the same time by using the single controller 200. FIG. 5 is a perspective view of the bridge 300 inserted into the connector 110 of the self-assembly heating panel 100 shown in FIG. 2. FIG. 6 is a perspective view of the connector 110 formed on the side of the self-assembly heating panel 100 shown in FIG. 2. FIG. 7 is a perspective view of a safety cap 400 which protects an inlet of the connector 110 shown in FIG. 6.

Referring to FIGS. 5 to 7, a configuration of electrically connecting adjacent self-assembly heating panels 100 when two or more of the self-assembly heating panels 100 forming the self-assembly electric mat 1 according to one embodiment of the present invention will be described in detail as follows. As shown in FIG. 5, the self-assembly electric mat 1 according to one embodiment includes the bridge 300 which electrically connects the respective connectors 110 of the adjacent self-assembly heating panels 100 when two or more of the self-assembly heating panels 100 are coupled with each other to form the electric heating mat 10.

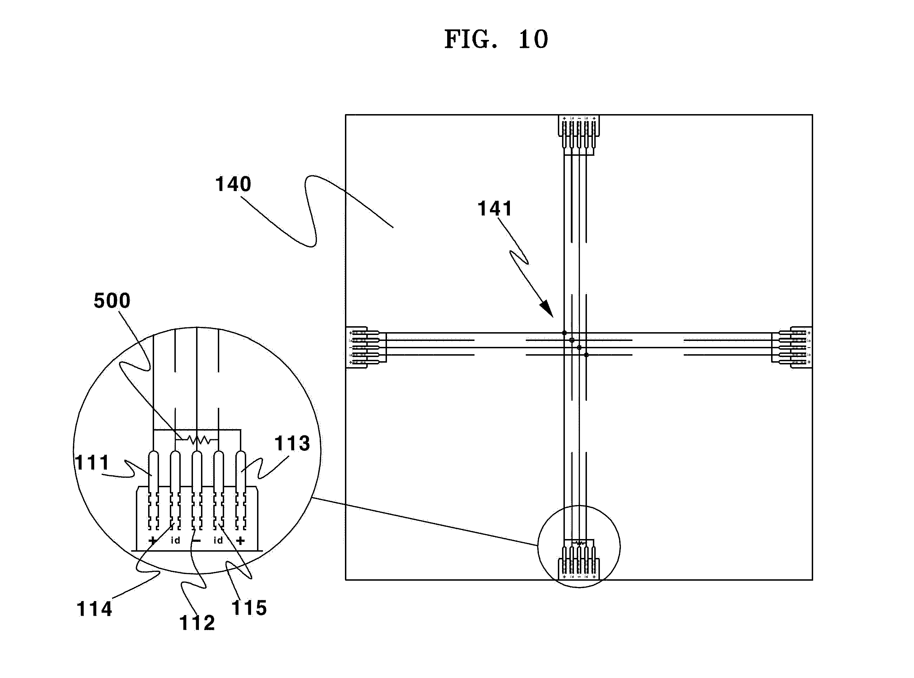

Here, the bridge 300 includes five connecting terminals 301 which have a pin structure with an I-shape corresponding to a connecting terminal of the connector 110 and are exposed from both sides and a housing 302 formed of an injection product having an insulating material which supports the five connecting terminals 301 at the same time. Here, the connecting terminal of the connector 110 will be described in detail with reference to FIG. 10.

Also, as shown in FIG. 6, the connector 110 is formed as a female socket having a T-shape to be inserted into and fixed to the side of the self-assembly heating panel 100. The connecting terminals 301 exposed from the both sides of the bridge 300 are inserted into the respective adjacent connectors 110 of the self-assembly heating panels 100 in such a way that the bridge 300 is built inside the self-assembly heating panels 100. Accordingly, the self-assembly electric mat 1 according to one embodiment of the present invention includes the bridge 300 having a structure of being built in the electric heating pad 10, thereby reducing a risk of being electrocuted and allowing an external image to be good looking.

Also, the self-assembly electric mat 1 according to one embodiment of the present invention is easy to detach the bridge 300 while being used in such a way that a user may arbitrarily adjust a size and shape of the self-assembly electric mat, thereby being easily maintained and available to recycle.

Meanwhile, as shown in FIGS. 6 and 7, the self-assembly electric mat 1 according to one embodiment of the present invention includes the safety cap 400 inserted into inlets of the plurality of connectors 110 to prevent foreign substances from getting into the plurality of connectors 110 having the female socket inserted into the side of the self-assembly heating panel 100.

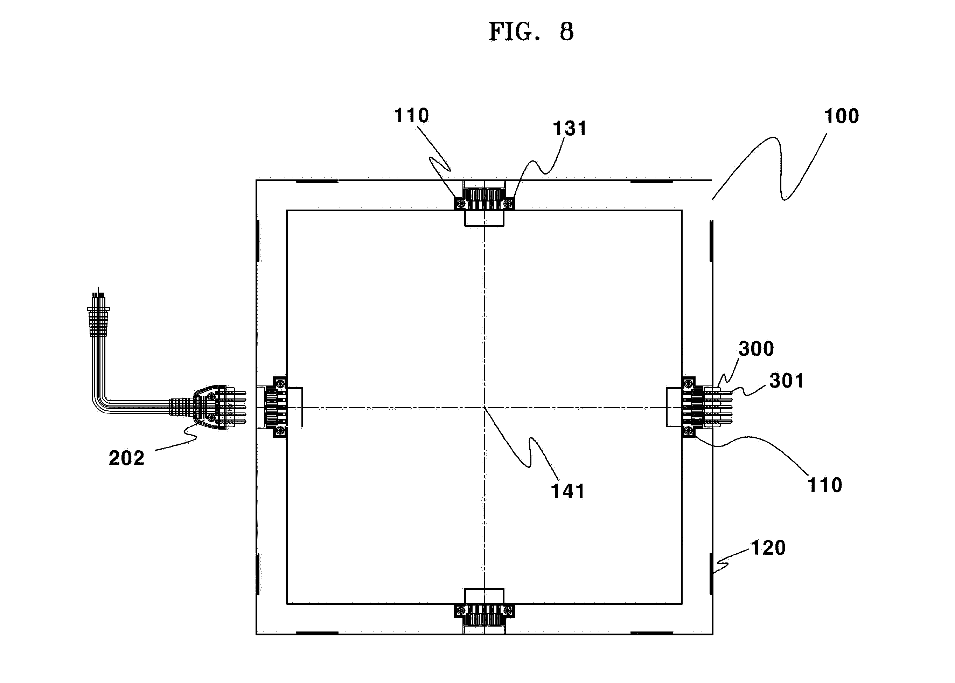

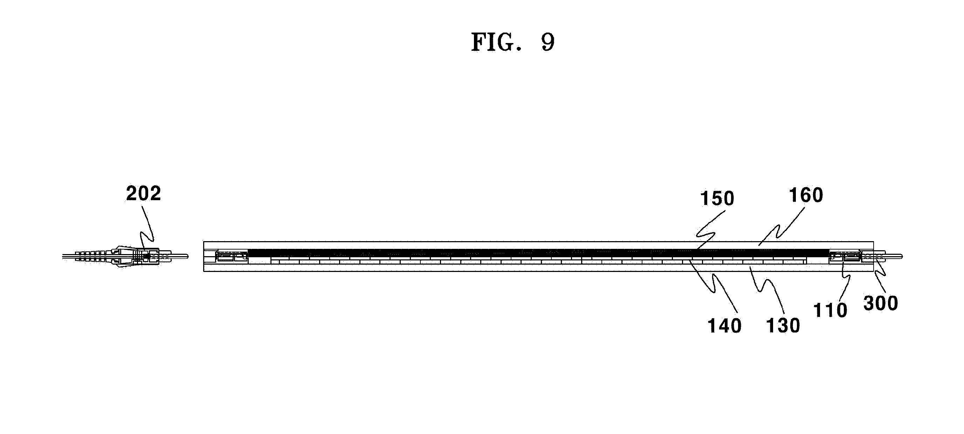

FIG. 8 is a top perspective view illustrating a structure in which the controller 200 and the bridge 400 are coupled with the connector 110 of the self-assembly heating panel 100 shown in FIG. 2. FIG. 9 is a cross-sectional view of an internal configuration of the self-assembly heating panel 100 shown in FIG. 2.

As shown in the drawings, the self-assembly heating panel 100 forming the electric heating mat 10 of the self-assembly electric mat 1 according to one embodiment of the present invention includes four sides in which the plurality of connectors 110 are formed as female sockets and inserted into and fixed to with a certain interval and is formed as a hexahedron with a square shape when viewed from above. However, one of ordinary skill in the art would have understood that the shape of the self-assembly heating panel 100 is not limited to the square and may be manufactured as various polygonal shapes such as a triangle and a pentagon.

Here, the self-assembly heating panel 100 includes a bottom panel 130 which includes four connecting grooves 131 formed on an edge of an outer end of a top surface thereof corresponding to the connectors; 110, an electric wiring layer 140 on which the four connectors 110 corresponding to the four connecting grooves 131 and an electric hot wire 141 are disposed, a heating element 150 which is electrically connected to the electric hot wire 141 disposed on the electric wiring layer 140 and heats, and a top panel 160 formed above the heating element 150 and the electric wiring layer 140 to protect the heating element 150 and the electric wiring layer 140.

Here, the heating element 150 may be one of carbon fiber and a heating film. Also, the four sides forming the self-assembly heating panel 100 are finished with silicone to be waterproofed. The top panel 160 and the bottom panel 130 forming the self-assembly heating panel 100 are formed of one of linoleum, thermoplastic poly urethane (TPU), ethylene-vinyl acetate copolymer (EVA), and silicone. According to one embodiment of the present invention, the monoleum easy to clean is used. The linoleum indicates poly vinyl chloride (PVC) flooring for a light step, which is quickly restored from being pressed or bent and is strong against water or shock.

Meanwhile, not shown in the drawings, according to one embodiment of the present invention, the self-assembly heating panel 100 further includes heat-retaining layers (not shown) formed above and below the heating element 150, respectively, to preserve heat generated by the heating element 150. The heat-retaining layers may be formed of one of wool and felt. According to one embodiment of the present invention, the heat-retaining layers are formed of wool. The wool has strong elasticity and excellent heat-retaining properties. Also, depending on external humidity, when rain drops or humidity get thereinto, the wool spontaneously radiates heat, which is applicable to the embodiment of the present invention.

FIG. 10 is a view illustrating an electric wiring built in the self-assembly heating panel 100 shown in FIG. 2 As shown in FIG. 10, the self-assembly heating panel 100 according to one embodiment of the present invention may include a single bar resistor 500 which has a resistance recognized by the controller 200 and is provided inside the side on which any one of the plurality of connectors 110 are disposed.

Also, according to one embodiment of the present invention, the plurality of connectors 110 each include three electrode terminals 111, 112, and 113 connected to the electric hot wire 141 built in the self-assembly heating panel 100, in which the three electrode terminals 111, 112, and 113 disposed in the middle and on both ends have mutually different polarities to allow a change of direction, and two resistive terminals 114 and 115 connected with the single bar resistor 500 in parallel among the electrode terminals 111, 112, and 113 having mutually different polarities. Here, in the embodiment of the present invention, the three electrode terminals 111, 112, and 113 are disposed in such a way that a negative terminal is disposed in the middle and positive terminals are disposed on both ends as shown in the drawing.

As described above, the self-assembly electric mat 1 according to one embodiment of the present invention includes the bar resistor 500 whose resistance is recognized by the controller 200 inside the connector 110 formed on the side of the self-assembly heating panel 100 to allow the controller 200 to check the number of the self-assembly heating panels 100. To form the electrode terminals 111, 112, and 113 of the connectors 110 into which the connecting terminals 301 of the bridge 300 are inserted, the electrode terminals 111, 112, and 113 having mutually different polarities are disposed in the middle and both ends, respectively, thereby preventing a change in polarity of the electrode terminals 111, 112, and 113 although a direction of the bridge 300 inserted into the connector 110 is changed.

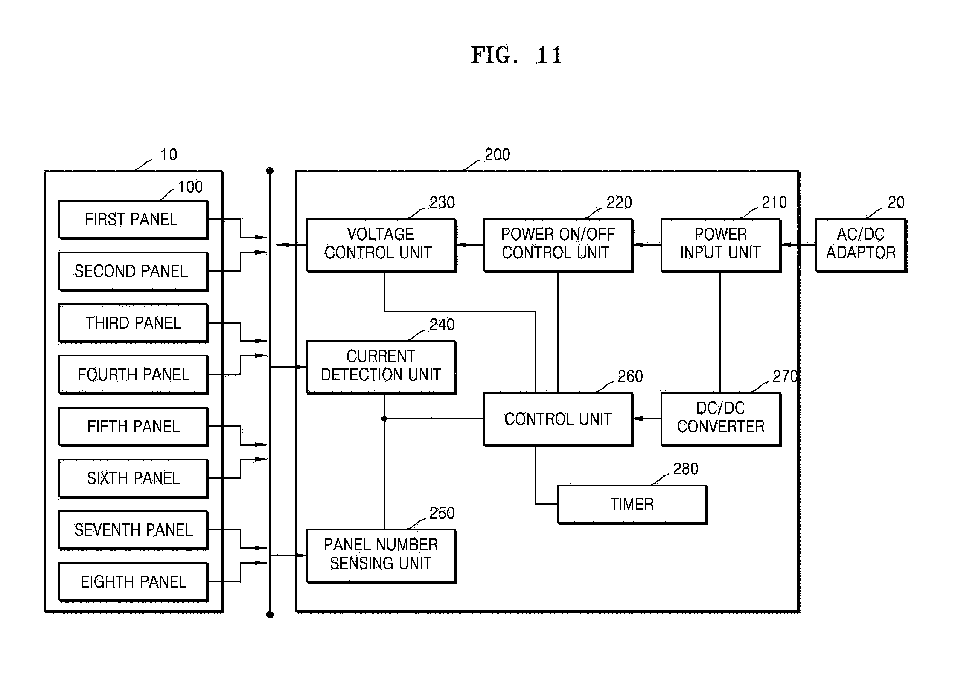

FIG. 11 is a block diagram schematically illustrating a configuration of the controller 200 shown in FIG. 1. As shown in the drawing, the self-assembly electric mat 1 according to one embodiment of the present invention may include an adaptor 20 which converts home AC power into DC power and provides the controller 200 with the DC power to supply the DC power to the electric heating mat 10.

Here, according to the embodiment of the present invention, a DC adaptor with a specification of 24 V, 6 A, and 120 W of maximum power is used. When the self-assembly heating panels 100 forming the electric heating mat 10 are eight as one set as shown in FIG. 1, an electric specification of each of the self-assembly heating panels 100 may satisfy 24 V, 0.6 A, and 15 W.

Referring to FIG. 11, an internal configuration of the controller 200 which supplies DC power to the electric heating mat 10 of the self-assembly electric mat 1 according to one embodiment of the present invention, controls a temperature, and blocks an overcurrent will be described in detail as follows.

As shown in the drawing, the controller 200 includes a power input unit 210, a power on/off control unit 220, a voltage control unit 230, a current detection unit 240, a panel number sensing unit 250, a control unit 260, a DC/DC converter unit 270, and a timer 280.

In detail, the power input unit 210 receives the DC power provided from the adaptor 20. Here, not shown in the drawing, the power input unit 210 includes an overcurrent blocking portion which blocks the DC power provided from the adaptor 20 when an overcurrent greater than an allowable current is input from the adaptor 20, an overvoltage blocking portion which blocks the DC power provided from the adaptor 20 when an overvoltage greater than an allowable voltage is applied from the adaptor 20, and an inverse connection preventing portion which blocks a current to protect a circuit when external power in which the polarity of the DC power is changed is applied.

Here, the overcurrent blocking portion is formed of a fuse which can block input power in the case of an overcurrent more than 10 A. The overvoltage blocking portion and the inverse connection preventing portion may include a diode circuit for preventing a surge voltage greater than 36 V or external power having a different specification from being applied.

The power on/off control unit 220 performs an on/off switching on DC power input to the power input unit 210 depending on an operation of a power switch included in the controller 200. Also, the voltage control unit 230 controls a voltage supplied to the electric heating mat 10 according to an operation of the temperature adjusting switch included in the controller 200 and adjusts the temperature of the self-assembly heating panels 100 forming the electric heating mat 10 to be uniform regardless of the number thereof.

Here, the voltage control unit 230 controls an on/off cycle of DC power supplied to the electric heating mat 10 using a pulse width modulation (PWM) method. As an ON time of a duty ratio which indicates a rate of a time in which a pulse is in an ON state increases, it becomes closer to 24 V applied from the DC power. Accordingly, an amount of currents which flow into a mat increases, thereby increasing the temperature. Meanwhile, the current detection unit 240 detects a current value flowing through the electric heating mat 10. When the current value flowing through the electric heating mat 10 is greater than a maximum current value allowed in the circuit, the current detection unit 240 transmits an overcurrent signal to the control unit 260 to block power supplied to the electric heating mat 10.

The panel number sensing unit 250 senses the number of the self-assembly heating panels 100 forming the electric heating mat 10. Here, the panel number sensing unit 250 includes a resistor connected to the bar resistor 500 singly built inside the self-assembly heating panel 100 forming the electric heating mat 10 in parallel and applies a change in a voltage value which varies with a change in number of the bar resistors 500 to the control unit 260 to sense the number of the self-assembly heating panels 100. Also, when it is sensed by the panel number sensing unit 250 that the number of the self-assembly heating panels 100 changes while the electric heating mat 10 is operating, the current detection unit 240 senses an overcurrent and the control unit 260 blocks the power supplied to the electric heating mat 10.

The control unit 260 compares the current value detected by the current detection unit 240 and a reference current value corresponding to the number of the self-assembly heating panels 100 sensed by the panel number sensing unit 250, and when it is determined as an overcurrent greater than an allowable current in the circuit, controls the power on/off control unit 220 to block the power supplied to the electric heating mat 10.

That is, according to one embodiment of the present invention, when an overcurrent signal value greater than a maximum current applicable to one self-assembly heating panel 100 the controller 200 is applied, the controller 200 allows the control unit 260 formed of a microcomputer (MICOM) to recognize an overcurrent and to block the power.

Here, a shunt resistor connected to the electric heating mat 10 is included in the current detection unit 240. When currents are applied to both ends of the shunt resistor, a voltage drop occurs on the both ends proportional to a current value. Here, when an overcurrent flows due to abnormality such as a breakdown, a great voltage drop occurs on the both ends of the both ends of the shunt resistor. Accordingly, this voltage is amplified by an integrated circuit (IC) forming the current detection unit 240 and an overcurrent signal is transmitted to the MICOM forming the control unit 260. The MICOM compares a voltage value with a set overcurrent value. When the voltage value is greater than the set overcurrent value, the MICOM blocks main power and protects the circuit from the overcurrent. In this case, the theory is applied identically and the power is blocked in case that an overcurrent instantaneously flows when the self-assembly heating panel 100 is being separated or coupled while the electric heating mat 10 is operating or in case that a current value flowing through the electric heating mat 10 exceeds an allowable value corresponding to a maximum temperature value of the electric heating mat 10.

Meanwhile, according to one embodiment of the present invention, the controller 200 includes the DC/DC converter 270 which converts the DC power provided from the adaptor 20 into a DC voltage for a control signal to generate a control signal of the control unit 260 and the timer 280 which controls a heating time depending on the operation of the time adjusting switch.

As described above, since the self-assembly electric mat 1 according to one embodiment of the present invention provides a voltage supplied to the electric hot wire 141 built in the self-assembly heating panel 100 as DC power, the occurrence of harmful electromagnetic waves may be fundamentally prevented and a risk of being electrocuted may be reduced.

Also, when a current which exceeds a maximum current is applied to the self-assembly heating panel 100 or the self-assembly heating panel 100 is separated or coupled while the electric heating mat 10 is operating, the current detection unit 240 which detects a current applied to the electric heating mat 10 formed of the self-assembly heating panels 100 may transmit an overcurrent signal to the control unit 260, thereby blocking power.

Additionally, the voltage control unit 230 which adjusts a temperature of the self-assembly heating panel 100 forming the electric heating mat 10 by controlling a voltage applied to the electric heating mat 10 is included in the controller 200 in such a way that the temperature of the self-assembly heating panel 100 forming the electric heating mat 10 is uniformly controlled regardless of the number thereof.

Although a few embodiments of the present invention have been shown and described, it would be appreciated by those skilled in the art that changes may be made in these embodiments without departing from the principles and spirit of the invention, the scope of which is defined in the claims and their equivalents.

### [Industrial Applicability]

The present invention may be applied to the field of manufacturing an electric mat.

## Claims

1. A self-assembly electric mat comprising:
an electric heating mat comprising at least one self-assembly heating panel which comprises an electric hot wire for heating, which is built therein, and a plurality of connectors electrically connected to the electric hot wire on sides thereof; and
a controller which is connected to any one of the plurality of connectors to supply direct current (DC) power to the electric heating mat, controls a temperature of the self-assembly heating panel forming the electric heating mat by controlling a voltage applied to the electric heating mat, and blocks the DC power supplied to the electric heating mat by sensing an overcurrent flowing through the electric heating mat.

2. The self-assembly electric mat of claim 1, wherein the electric heating mat comprises a bridge which electrically connects the respective connectors of the mutually adjacent self-assembly heating panels when two or more self-assembly heating panels are coupled.

3. The self-assembly electric mat of claim 2, wherein the self-assembly heating panel comprises a coupling member which fixes a contact portion between two adjacent self-assembly heating panels when two or more self-assembly heating panels are coupled.

4. The self-assembly electric mat of claim 3, wherein the coupling member is one of a magnet, a zipper, a Velcro tape, and a double-sided tape.

5. The self-assembly electric mat of claim 1, wherein the self-assembly heating panel comprises a single bar resistor whose resistance is recognized by the controller, the bar resistor being provided inside one of the plurality of connectors.

6. The self-assembly electric mat of claim 5, wherein the plurality of connectors each comprise three electrode terminals which are connected to the electric hot wire built in the self-assembly heating panel, in which the electrode terminal in the middle has a different polarity from the electrode terminals on both ends to allow a change of direction, and two resistive terminals each disposed between the electrode terminals whose polarities differ from the polarity thereof and connected with the single bar resistor in parallel.

7. The self-assembly electric mat of claim 1, wherein the plurality of connectors are each inserted into the side of the self-assembly heating panel with a certain interval and formed of a female socket having a T-shape.

8. The self-assembly electric mat of claim 7, comprising a bridge having a structure of electrically connecting the respective connectors of the mutually adjacent self-assembly heating panels when two or more self-assembly heating panels are coupled, in which both ends of the bridge are inserted into the respective connectors of the mutually adjacent self-assembly heating panels and built inside the self-assembly heating panels.

9. The self-assembly electric mat of claim 7, comprising a safety cap inserted into an inlet of each of the plurality of connectors to prevent foreign substances from getting into each of the plurality of connectors formed as the female socket inserted into the side of the self-assembly heating panel.

10. The self-assembly electric mat of claim 1, wherein the self-assembly heating panel comprises four sides in which the connectors are formed as female sockets and inserted and fixed with a certain interval and is formed as a hexahedron with a square shape when viewed from above.

11. The self-assembly electric mat of claim 10, wherein the self-assembly heating panel comprises:
a bottom panel which includes four connecting grooves formed on an edge of an outer end of a top surface thereof corresponding to the connectors;
an electric wiring layer on which the four connectors corresponding to the four connecting grooves and the electric hot wire are disposed;
a heating element which is electrically connected to the electric hot wire disposed on the electric wiring layer and heats; and
a top panel formed above the heating element and the electric wiring layer to protect the heating element and the electric wiring layer.

12. The self-assembly electric mat of claim 11, wherein the self-assembly heating panel further comprises heat-retaining layers formed above and below the heating element to preserve heat generated from the heating element.

13. The self-assembly electric mat of claim 11, wherein the heating element is one of carbon fiber and a heating film.

14. The self-assembly electric mat of claim 12, wherein the four sides of the self-assembly heating panel are finished with silicone to be waterproofed.

15. The self-assembly electric mat of claim 14, wherein the top panel and the lower panel forming the self-assembly heating panel are formed of one of linoleum, thermoplastic poly urethane (TPU), ethylene-vinyl acetate copolymer (EVA), and silicone to be easily cleaned.

16. The self-assembly electric mat of claim 1, further comprising an adaptor which converts home alternating current (AC) power into DC power and provides the controller with the DC power to supply the DC power to the electric heating mat.

17. The self-assembly electric mat of claim 16, wherein the controller comprises:
a power input unit which receives the DC power provided from the adaptor;
a power on/off control unit which performs on/off switching with respect to the DC power depending on an operation of a power switch;
a voltage control unit which uniformly controls a temperature of the self-assembly heating panels forming the electric heating panel regardless of the number thereof by controlling a voltage supplied to the electric heating mat;
a current detection unit which detects a current value flowing through the electric heating mat;
a panel number sensing unit which senses the number of the self-assembly heating panels forming the electric heating mat; and
a control unit which compares the current value detected by the current detection unit with a reference current value corresponding to the number of the self-assembly heating panels sensed by the panel number sensing unit, and when it is determined as an overcurrent which exceeds an allowable current in a circuit, blocks power supplied to the electric heating mat by controlling the power on/off control unit.

18. The self-assembly electric mat of claim 17, wherein the power input unit comprises:
an overcurrent blocking portion which blocks the DC power provided from the adaptor when the overcurrent which exceeds the allowable current is input from the adaptor;
an overvoltage blocking portion which blocks the DC power provided from the adaptor when an overvoltage which exceeds an allowable voltage is input from the adaptor; and
an inverse connection preventing portion which blocks currents to protect the circuit when external power in which the polarity of the DC power is changed is applied.

19. The self-assembly electric mat of claim 17, wherein the panel number sensing unit comprises a resistor connected with the bar resistor singly built in the at least one self-assembly heating panel forming the electric heating mat and senses the number of the self-assembly heating panels by applying a change in a voltage value depending on a change in the number of the bar resistors.

20. The self-assembly electric mat of claim 17, wherein the current detection unit transmits an overcurrent signal to the control unit to block the power supplied to the electric heating mat when the current value flowing through the electric heating mat exceeds a maximum allowable current value.

21. The self-assembly electric mat of claim 17, wherein the controller comprises a DC/DC converter which converts the DC power provided from the adaptor into a DC voltage for a control signal to generate a control signal of the control unit.

22. The self-assembly electric mat of claim 17, wherein the controller comprises a timer which controls a heating time depending on an operation of a time adjusting switch.
